# EUROPEAN PATENT APPLICATION

(11) **EP 4 317 862 A1**
(43) Date of publication of application: **07.02.2024**
(21) Application number: 22780599.1
(22) Date of filing: 25.03.2022
(51) Int. Cl.: F25B 45/00, F25B 1/00

(54) **REFRIGERANT RECOVERY SYSTEM AND REFRIGERANT FILLING SYSTEM**

(30) Priority: 30.03.2021 JP 2021058334
(71) Applicant: Daikin Industries, Ltd., Osaka-shi, Osaka 530-0001 (JP)
(72) Inventor: UEDA, Hiroki, Osaka-shi, Osaka 530-0001 (JP); YOSHIMI, Atsushi, Osaka-shi, Osaka 530-0001 (JP); KUMAKURA, Eiji, Osaka-shi, Osaka 530-0001 (JP); TANAKA, Masaki, Osaka-shi, Osaka 530-0001 (JP); NAKAYAMA, Masaki, Osaka-shi, Osaka 530-0001 (JP); KAJI, Ryuhei, Osaka-shi, Osaka 530-0001 (JP)
(74) Representative: Conti, Marco
(86) International application number: PCT/JP2022/014532
(87) International publication number: WO 2022/210386

(57) **Abstract**

There has been no detailed study on a technical idea of selectively separating a specific component constituting a refrigerant while recovering the refrigerant. A refrigerant recovery system (1) is a system that performs separation of a first refrigerant from a refrigerant including the first refrigerant and recovery of the refrigerant. The refrigerant recovery system (1) includes a separation unit (10) and a storage unit (20). The separation unit (10) performs the separation of the first refrigerant. The storage unit (20) stores the refrigerant after the first refrigerant is separated.

## Description

### Technical Field

The present disclosure relates to a refrigerant recovery system and a refrigerant filling system.

### Background Art

Conventionally, in order to reuse a used refrigerant used in a refrigeration apparatus or the like, a technique of recovering the used refrigerant sealed in the refrigeration apparatus or the like is known. For example, PTL 1 (Japanese Unexamined Patent Application Publication No. 2017-72284) discloses a system in which a refrigerant of a refrigerating device is recovered and filled in a refrigerant recovery container.

### Summary of Invention

### Technical Problem

Meanwhile, conventionally, there has been no detailed study on a technical idea of selectively separating a specific component constituting a refrigerant while recovering the refrigerant. In other words, an operation of recovering the refrigerant and an operation of selectively separating a specific component constituting the refrigerant that are involved in reuse of the refrigerant are treated as different operations.

### Solution to Problem

A refrigerant recovery system of a first aspect is a system configured to perform separation of a first refrigerant from a refrigerant comprising the first refrigerant and recovery of the refrigerant. The refrigerant recovery system comprises a separation unit and a storage unit. The separation unit is configured to perform the separation of the first refrigerant. The storage unit is configured to store the refrigerant before the first refrigerant is separated or after the first refrigerant is separated.

The refrigerant recovery system according to the first aspect includes the separation unit that performs the separation of the first refrigerant. With this configuration, it is possible to selectively separate the first refrigerant, which is a specific component included in the refrigerant, while recovering the refrigerant. Therefore, with the refrigerant recovery system according to the first aspect, the number of work steps related to the reuse of the refrigerant is reduced.

A refrigerant recovery system of a second aspect is the refrigerant recovery system of the first aspect, in which the separation of the first refrigerant is performed when the refrigerant is recovered from a device using the refrigerant.

To recover a specific component included in a recovered refrigerant with a conventional refrigerant recovery system, processes of bringing the recovered refrigerant back to a plant and separating the component in the refrigerant in the plant are required.

In the refrigerant recovery system according to the second aspect, the separation of the first refrigerant is performed when the refrigerant is recovered from a device using the refrigerant. With this configuration, the component in the refrigerant can be separated at a location of the refrigerant recovery. In other words, the components in the recovered refrigerant can be separated without the recovered refrigerant being brought back to the plant. Therefore, with the refrigerant recovery system according to the second aspect, the number of work steps related to the reuse of the refrigerant is reduced.

A refrigerant recovery system of a third aspect is the refrigerant recovery system of the first aspect or the second aspect, in which the separation of the first refrigerant is performed on the refrigerant stored in the storage unit.

With the refrigerant recovery system according to the third aspect, the first refrigerant, which is the specific component included in the recovered refrigerant, can be selectively separated. With this configuration, the number of work steps related to the reuse of the refrigerant is reduced.

A refrigerant recovery system of a fourth aspect is the refrigerant recovery system according to any of the first aspect to the third aspect, in which the separation unit is configured to adjust a composition of the refrigerant into a different composition through the separation of the first refrigerant.

It is conceivable to adjust the composition of the recovered refrigerant to reuse the recovered refrigerant. To adjust the composition of the recovered refrigerant with the conventional refrigerant recovery system, the recovered refrigerant needs to be brought back to the plant.

With the refrigerant recovery system according to the fourth aspect, the composition of the refrigerant is adjusted into a different composition as a result of the separation of the first refrigerant by the separation unit. With this configuration, the composition of the refrigerant can be adjusted without the refrigerant being brought back to the plant. Therefore, with the refrigerant recovery system according to the fourth aspect, the number of work steps related to the reuse of the refrigerant is reduced.

A refrigerant recovery system of a fifth aspect is the refrigerant recovery system according to any of the first aspect to the fourth aspect, in which the separation unit includes a separation membrane through which the first refrigerant is separated from the refrigerant. The first refrigerant that has permeated through the separation membrane is discharged to the atmosphere.

As the handling of the first refrigerant separated from the refrigerant, the separated first refrigerant may be stored in a predetermined container provided to the refrigerant recovery system, for example. However, depending on the amount of the separated first refrigerant and the properties of the first refrigerant, the first refrigerant discharged to the atmosphere may have no significant impact on the human body and the global environment.

In the refrigerant recovery system according to the fifth aspect, the first refrigerant is discharged to the atmosphere. The refrigerant recovery system with this configuration does not need to be provided with a container for storing the separated first refrigerant. Or the container for storing the separated first refrigerant can be downsized. Therefore, the refrigerant recovery system according to the fifth aspect can be downsized as a whole.

A refrigerant recovery system of a sixth aspect is the refrigerant recovery system according to any of the first aspect to the fourth aspect, in which the separation unit includes an adsorbent onto which the first refrigerant is adsorbed.

A refrigerant recovery system of a seventh aspect is the refrigerant recovery system according to any of the first aspect to the sixth aspect, in which the separation unit is a mechanism that distills the first refrigerant from the refrigerant.

A refrigerant recovery system of an eighth aspect is the refrigerant recovery system according to any of the first aspect to the seventh aspect, in which the first refrigerant is CO₂.

A refrigerant filling system of a ninth aspect is a system configured to fill a device with a mixed refrigerant comprising a first refrigerant and a second refrigerant. The refrigerant filling system includes a first storage unit, a second storage unit, a mixing unit, and a filling unit. The first storage unit is configured to store the first refrigerant. The second storage unit is configured to store a refrigerant obtained as a result of separation, during or after the recovery, of at least part of the first refrigerant from the mixed refrigerant recovered from another device. The mixing unit is configured to mix the first refrigerant supplied from the first storage unit with the refrigerant supplied from the second storage unit to generate the mixed refrigerant. The mixed refrigerant is a refrigerant which is filled in the device. The filling unit is configured to fill the device with the mixed refrigerant from the mixing unit.

The refrigerant filling system according to the ninth aspect includes the first storage unit that stores the first refrigerant, and the second storage unit that stores the refrigerant obtained as a result of separation of at least part of the first refrigerant. Further, in the refrigerant filling system according to the ninth aspect, the device is filled with the refrigerant generated by mixing the first refrigerant with the refrigerant obtained as a result of separation of at least part of the first refrigerant. With this configuration, it is possible to perform the refrigerant refilling work without the refrigerant, which is recovered from the other device, being brought back to the plant. Therefore, with the refrigerant filling system according to the ninth aspect, the number of work steps related to the reuse of the refrigerant is reduced.

A refrigerant filling system of a tenth aspect is the refrigerant filling system according to the ninth aspect, in which the mixing unit is configured to generate the mixed refrigerant which is filled in the device, by mixing the first refrigerant to adjust a composition of the refrigerant into a different composition.

In the refrigerant filling system according to the tenth aspect, the mixed refrigerant with the composition of the refrigerant adjusted is generated by the mixing unit. With this configuration, it is possible to perform the refrigerant refilling work without the refrigerant, which is recovered from the other device, being brought back to the plant. Therefore, with the refrigerant filling system according to the tenth aspect, the number of work steps related to the reuse of the refrigerant is reduced.

A refrigerant filling system of an eleventh aspect is the refrigerant filling system of the ninth aspect or the tenth aspect, in which the first refrigerant is CO₂.

With this configuration, the mixing unit can generate the mixed refrigerant in which CO₂ is mixed.

### Brief Description of Drawings

[Fig. 1] Fig. 1 is a schematic view of an overall configuration of a refrigerant recovery system according to a first embodiment.
[Fig. 2] Fig. 2 is a schematic view of an overall configuration of a refrigerant recovery system according to Modification 1B.
[Fig. 3] Fig. 3 is a schematic view of an overall configuration of a refrigerant recovery system according to Modification 1C.
[Fig. 4] Fig. 4 is a schematic view of an overall configuration of a refrigerant recovery system according to Modification 1D.
[Fig. 5] Fig. 5 is a schematic view of an overall configuration of a refrigerant filling system according to a second embodiment.
[Fig. 6] Fig. 6 is a schematic view of an overall configuration of a refrigerant filling system according to a third embodiment.

### Description of Embodiments

Embodiments of a refrigerant recovery system and a refrigerant filling system according to the present disclosure will be described below with reference to the drawings as appropriate. It should be noted that in the following, an excessively detailed description may be omitted. For example, a detailed description of well-known matters or a redundant description on substantially the same configuration may be omitted. This is to prevent the following description from being unnecessarily redundant and to facilitate understanding by those skilled in the art.

### <First embodiment>

### (1) Overall configuration of refrigerant recovery system 1

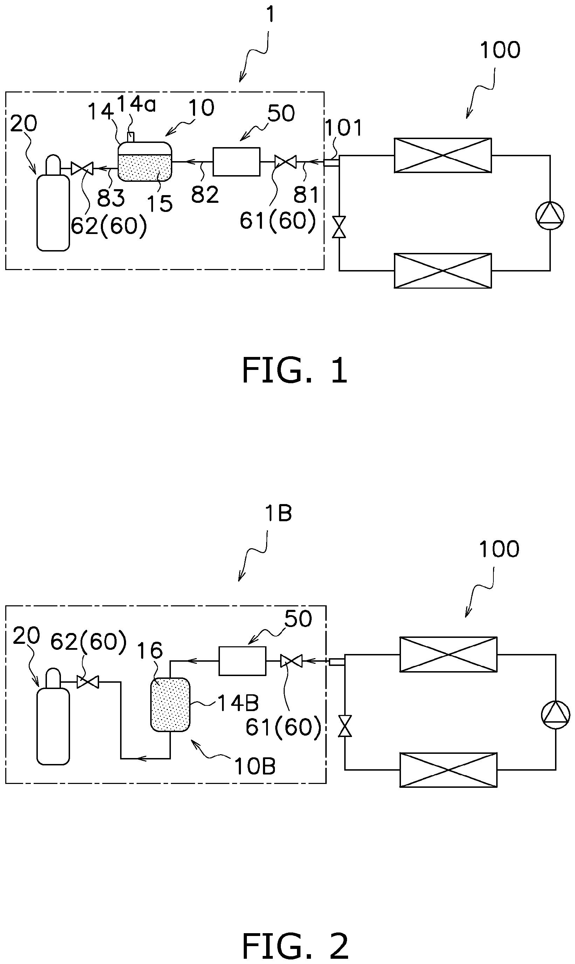

An overview of a refrigerant recovery system 1 according to an embodiment of the present disclosure will be described with reference to Fig. 1. Fig. 1 is a diagram schematically illustrating the overall configuration of the refrigerant recovery system 1 according to the present embodiment. The refrigerant recovery system 1 is a system that separates a specific component constituting a used refrigerant when recovering the used refrigerant. In the present embodiment, the used refrigerant refers to a refrigerant filled in a device 100 (see Fig. 1). The device 100 is a refrigeration apparatus installed in a building or the like, and is, for example, an air conditioning apparatus. In the present embodiment, a space in which the device 100 is installed may be referred to as a "site". In the present embodiment, a facility for managing the recovered refrigerant may be referred to as a "plant". In the present embodiment, the used refrigerant is a mixed refrigerant including a first refrigerant and a second refrigerant as components. The first refrigerant is, for example, CO₂. The second refrigerant is, for example, HFO. A non-limiting specific example of the HFO used as the second refrigerant is R1234Ze (cis-1,3,3,3-tetrafluoropropene). For example, instead of R1234Ze, R1234yf (2,3,3,3-tetrafluoropropene) may be used for the HFO as the second refrigerant. However, the components of the used refrigerant are not limited thereto and can be appropriately changed without departing from the scope of the present disclosure. The used refrigerant may be a mixed refrigerant including three or more components.

Each unit of the refrigerant recovery system 1 will be described below in detail, with an example of a case where the refrigerant recovery system 1 is used on site. As illustrated in Fig. 1, the refrigerant recovery system 1 according to the present embodiment includes a flow rate adjustment mechanism 60, a refrigerant recovery device 50, a separation unit 10, and a storage unit 20. In the present embodiment, when the operation of the refrigerant recovery system 1 starts, the used refrigerant sealed in the device 100 flows in a direction indicated by arrows in Fig. 1.

### (2) Detailed configuration

### (2-1) Flow rate adjustment mechanism 60

The flow rate adjustment mechanism 60 is a mechanism that adjusts the flow rate of the used refrigerant flowing from the device 100 to the storage unit 20. The flow rate adjustment mechanism according to the present embodiment includes a first valve 61 and a second valve 62. The first valve 61 is disposed between the device 100 and the refrigerant recovery device 50. The second valve 62 is disposed between the separation unit 10 and the storage unit 20. In the present embodiment, the first valve 61 and the second valve 62 are manual valves whose opening degrees are adjusted by being operated by a person who performs a refrigerant recovery operation (hereafter, simply referred to as an "operator"). However, the configurations of the first valve 61 and the second valve 62 are not limited thereto, and the valves 61, 62 may be, for example, electric valves whose opening degrees are adjusted by a controller (not illustrated).

### (2-2) Refrigerant recovery device 50

The refrigerant recovery device 50 is a device configured to recover the used refrigerant filled in the device 100. The refrigerant recovery device 50 includes an expansion mechanism, a first heat exchanger, an impurity separator, a dryer, a compressor, and a second heat exchanger, which are not illustrated. The expansion mechanism adjusts the flow rate and pressure of the used refrigerant. The first heat exchanger evaporates the used refrigerant before being sucked into the compressor. The impurity separator separates impurities (such as refrigerating machine oil and dust) contained in the used refrigerant, from the used refrigerant. The dryer removes moisture contained in the used refrigerant, from the used refrigerant. The compressor sucks, from the device 100, and compresses the used refrigerant using a compression mechanism (not illustrated). The second heat exchanger condenses the used refrigerant discharged from the compressor. The refrigerant condensed by the second heat exchanger flows into the separation unit 10.

### (2-3) Separation unit 10

The separation unit 10 is a mechanism configured to separate a specific component included in the used refrigerant. The separation unit 10 according to the present embodiment includes a refrigerant separation container 14 to which a separation membrane 15 is attached. The separation membrane 15 is, for example, a microporous membrane containing zeolite as a raw material. Alternatively, the separation membrane 15 is a microporous membrane containing a metal-organic framework (MOF) having high CO₂ selectivity as a raw material. The material contained in the raw material of the separation membrane 15 is not limited to zeolite or MOF, and any material having high CO₂ selectivity may be appropriately selected.

In the present embodiment, the microporous membrane serving as the separation membrane 15 is configured to separate CO₂ through a molecular sieve effect. With this configuration, CO₂ can be separated from the refrigerant passing through the separation membrane 15. In other words, the first refrigerant can be separated from the used refrigerant flowing from the refrigerant recovery device 50 toward the storage unit 20. The first refrigerant that has permeated through the separation membrane 15 and is separated from the used refrigerant is introduced into a space 14a of the refrigerant separation container 14. The space 14a is a space for releasing the first refrigerant separated from the used refrigerant to the atmosphere. The first refrigerant introduced into the space 14a is discharged from the space 14a to the atmosphere.

While the first refrigerant is separated from the used refrigerant in the separation unit 10, a component (second refrigerant) other than the first refrigerant passes through the separation unit 10. The second refrigerant that has passed through the separation unit 10 flows into the storage unit 20.

As described above, the separation unit 10 according to the present embodiment is a mechanism that separates the first refrigerant from the used refrigerant including the first refrigerant and the second refrigerant as components. From another viewpoint, the separation unit 10 can be regarded as a mechanism that adjusts the composition of the used refrigerant into a different composition through the separation of the first refrigerant from the used refrigerant.

### (2-4) Storage unit 20

The storage unit 20 is a cylinder for refrigerant recovery having, for example, a service valve, a float sensor, and a fusible plug (not illustrated). The storage unit 20 stores the used refrigerant from which the first refrigerant has been separated by the separation unit 10. In other words, the storage unit 20 stores the second refrigerant.

As described above, with the refrigerant recovery system 1 according to the present embodiment, when the operator recovers the mixed refrigerant of the first refrigerant and the second refrigerant from the device 100, the first refrigerant and the second refrigerant are separated from each other. With this configuration, in the mixed refrigerant recovery operation, the second refrigerant that is substantially a single refrigerant can be recovered. In addition, in the refrigerant recovery system 1 according to the present embodiment, the operation of recovering the refrigerant and the operation of selectively separating a specific component including the refrigerant can be simultaneously performed.

### (3) Features

(3-1)
The refrigerant recovery system 1 according to the present embodiment is a system that performs separation of a first refrigerant from a refrigerant including the first refrigerant and recovery of the refrigerant. The refrigerant recovery system 1 includes the separation unit 10 and the storage unit 20. The separation unit 10 performs the separation of the first refrigerant. The storage unit 20 stores the refrigerant after the first refrigerant is separated.

The refrigerant recovery system 1 according to the present embodiment includes the separation unit 10 that performs the separation of the first refrigerant. With this configuration, it is possible to selectively separate the first refrigerant, which is a specific component included in the refrigerant, while recovering the refrigerant. Therefore, with the refrigerant recovery system 1 according to the present embodiment, the number of work steps related to the reuse of the refrigerant is reduced.

In the refrigerant recovery system 1 according to the present embodiment, the operator does not need to perform a special operation to separate the first refrigerant. Therefore, in the refrigerant recovery system 1 according to the present embodiment, the first refrigerant can be easily separated.
(3-2)

In the refrigerant recovery system 1 according to the present embodiment, the separation of the first refrigerant is performed when the refrigerant is recovered from the device 100 using the refrigerant.

To recover a specific component included in a recovered refrigerant with a conventional refrigerant recovery system, processes of bringing the recovered refrigerant back to a plant and separating the component in the refrigerant in the plant are required.

In the refrigerant recovery system 1 according to the present embodiment, the separation of the first refrigerant is performed when the refrigerant is recovered from the device 100 using the refrigerant. With this configuration, the component in the refrigerant can be separated at a location (site) of the refrigerant recovery. In other words, the components in the recovered refrigerant can be separated without the recovered refrigerant being brought back to the plant. Therefore, with the refrigerant recovery system 1 according to the present embodiment, the number of work steps related to the reuse of the refrigerant is reduced.

Furthermore, with the refrigerant recovery system 1 according to the present embodiment, time and monetary costs for bringing the recovered refrigerant back to the plant can be reduced.
(3-3)

In the refrigerant recovery system 1 according to the present embodiment, the separation unit 10 adjusts the composition of the refrigerant into a different composition through the separation of the first refrigerant.

It is conceivable to adjust the composition of the recovered refrigerant to reuse the recovered refrigerant. To adjust the composition of the recovered refrigerant with the conventional refrigerant recovery system, the recovered refrigerant needs to be brought back to the plant.

In the refrigerant recovery system 1 according to the present embodiment, the composition of the refrigerant is adjusted into a different composition as a result of the separation of the first refrigerant by the separation unit 10. With this configuration, the composition of the refrigerant can be adjusted without the refrigerant being brought back to the plant. Therefore, with the refrigerant recovery system 1 according to the present embodiment, the number of work steps related to the reuse of the refrigerant is reduced.
(3-4)

In the refrigerant recovery system 1 according to the present embodiment, the separation unit 10 includes the separation membrane 15 through which the first refrigerant is separated from the refrigerant. The first refrigerant that has permeated through the separation membrane 15 is discharged to the atmosphere.

As the handling of the first refrigerant separated from the refrigerant the separated first refrigerant may be stored in a predetermined container provided to the refrigerant recovery system 1, for example. However, depending on the amount of the separated first refrigerant and the properties of the first refrigerant, the first refrigerant discharged to the atmosphere may have no significant impact on the human body and the global environment.

In the refrigerant recovery system 1 according to the present embodiment, the first refrigerant is discharged to the atmosphere. The refrigerant recovery system 1 with this configuration does not need to be provided with a container for storing the separated first refrigerant. Or the container (such as the refrigerant separation container 14) for storing the separated first refrigerant can be downsized. Therefore, the refrigerant recovery system 1 according to the present embodiment can be downsized as a whole.

In the present embodiment, a small amount of the second refrigerant may be discharged to the atmosphere due to the properties of the separation membrane 15. However, since the second refrigerant according to the present embodiment is a HFO refrigerant with a small environmental load, it is anticipated that there is no significant problem even when a small amount of the HFO refrigerant is discharged to the atmosphere together with the first refrigerant.
(3-5)

In the refrigerant recovery system 1 according to the present embodiment, the first refrigerant is CO₂.

In the refrigerant recovery system 1 according to the present embodiment, the separation membrane 15 is a microporous membrane including zeolite or MOF as a raw material. With this configuration, it is possible to selectively separate CO₂, which is a specific component included in the refrigerant, while recovering the refrigerant.

### (4) Modifications

Modifications of the first embodiment will be described below. The following modifications may be appropriately combined with each other as long as they do not contradict each other. The same components as those in the first embodiment are denoted with the same reference numerals, and a detailed description thereof will be omitted.

### (4-1) Modification 1A

In the example described in the above embodiment, the refrigerant recovery system 1 is used in a space (site) where the device 100 is installed. However, the refrigerant recovery system 1 is not limited to the use on site. For example, the refrigerant recovery system 1 may be used in the plant. In this case, in the refrigerant recovery system 1, the used refrigerant filled in a predetermined container may be recovered into the storage unit 20. The refrigerant recovery system 1 may include a pump instead of the refrigerant recovery device.

### (4-2) Modification 1B

In the example described in the above embodiment, the separation unit 10 includes the separation membrane 15. However, the configuration of the separation unit is not limited thereto. For example, the separation unit may include an adsorbent 16 onto which the first refrigerant is adsorbed.

Fig. 2 illustrates an example of a refrigerant recovery system 1B according to the present modification. The refrigerant recovery system 1B includes a separation unit 10B. As illustrated in Fig. 2, the separation unit 10B according to the present modification includes a refrigerant separation container 14B. The refrigerant separation container 14B is filled with the adsorbent 16 onto which the first refrigerant is adsorbed and held. In the present modification, the first refrigerant is CO₂, and the adsorbent 16 includes zeolite as a raw material. Alternatively, the adsorbent 16 may include a metal-organic framework (MOF) having high CO₂ selectivity as a raw material. The material included in the raw material of the adsorbent 16 is not limited to zeolite or MOF, and any material having high CO₂ selectivity may be appropriately selected.

In the refrigerant recovery system 1B according to the present modification, when the used refrigerant passes through the refrigerant separation container 14B, the first refrigerant included in the used refrigerant is adsorbed and held on the adsorbent 16. The first refrigerant adsorbed and held on the adsorbent 16 is stored in the refrigerant separation container 14B.

With the refrigerant recovery system 1B according to the present modification, effects that are the same as those described with the refrigerant recovery system 1 can be obtained.

### (4-3) Modification 1C

In the example described in the above embodiment, the first refrigerant is separated when the used refrigerant is recovered from the device 100. Alternatively, the separation of the first refrigerant may be performed on the refrigerant stored in the storage unit.

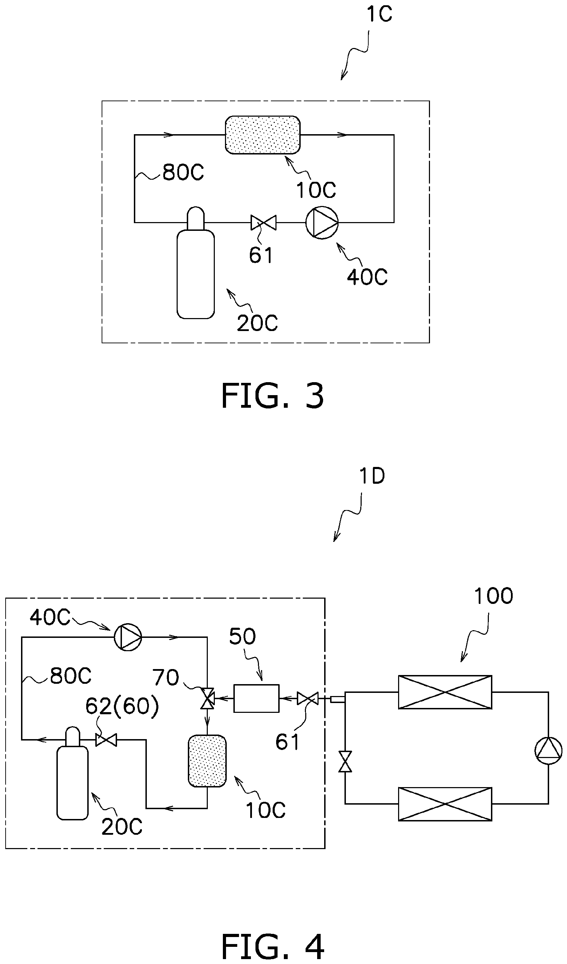

Fig. 3 illustrates an example of a refrigerant recovery system 1C according to the present modification. The refrigerant recovery system 1C includes a separation unit 10C, a storage unit 20C, a pump 40C, the first valve 61, and a hose 80C.

The storage unit 20C is a cylinder filled with the used refrigerant recovered by the refrigerant recovery device 50 or the like. The storage unit 20C stores the used refrigerant before the separation of the first refrigerant. In other words, the storage unit 20C stores the refrigerant including the first refrigerant and the second refrigerant as components. The separation unit 10C is a mechanism configured to separate the first refrigerant from the refrigerant filled in the storage unit 20C. Since the configuration of the separation unit 10C is substantially the same as the configuration of the separation unit 10B described above, a description thereof will be omitted here. Alternatively, the configuration of the separation unit 10C may be the same as the configuration of the separation unit 10 described above. The pump 40C sucks the refrigerant stored in the storage unit 20C through the hose 80C. The refrigerant sucked from the storage unit 20C by the pump 40C flows through the hose 80C, passes through the separation unit 10C and the first valve 61, and is stored in the storage unit 20C again.

In the refrigerant recovery system 1C according to the present modification, the first refrigerant, which is the specific component included in the recovered refrigerant, can be selectively separated. With this configuration, the number of work steps related to the reuse of the refrigerant is reduced.

### (4-4) Modification 1D

In the example described in the above embodiment, the first refrigerant is separated when the used refrigerant is recovered from the device 100. Further, in the example described in Modification 1C, the separation of the first refrigerant is performed on the used refrigerant stored in the storage unit 20C. However, the mode of separation of the first refrigerant is not limited to these examples. For example, the separation of the first refrigerant may be performed a plurality of times. Specifically, the separation of the first refrigerant may be performed when the used refrigerant is recovered from the device 100 and may be also performed on the used refrigerant stored in the storage unit.

Fig. 4 illustrates an example of a refrigerant recovery system 1D according to the present modification. The refrigerant recovery system 1D includes a flow path switching valve 70, the refrigerant recovery device 50, the separation unit 10C, the first valve 61, the pump 40C, the hose 80C, and the storage unit 20C.

The flow path switching valve 70 is a valve configured to make the used refrigerant flowing from the device 100 toward the storage unit 20C and the used refrigerant sucked from the storage unit 20C by the pump 40C flow to the separation unit 10C. The configurations of the refrigerant recovery device 50, the separation unit 10C, the first valve 61, the pump 40C, the hose 80C, and the storage unit 20C have already been described, and thus the description thereof will be omitted.

In the refrigerant recovery system according to the present modification, the separation of the first refrigerant is performed a plurality of times. With this configuration, the first refrigerant can be accurately separated.

### (4-5) Modification 1E

In the example described in the above embodiment, the separation unit 10 includes the separation membrane 15. However, the configuration of the separation unit 10 is not limited thereto. For example, the separation unit 10 may be a mechanism that distills the first refrigerant from the used refrigerant.

With the refrigerant recovery system according to the present modification, effects that are the same as those described with the refrigerant recovery system 1 can be obtained.

### (4-6) Modification 1F

In the example described in the above embodiment, the separation unit 10 is disposed between the refrigerant recovery device 50 and the storage unit 20 (see Fig. 1). However, the configuration of the refrigerant recovery system 1 is not limited thereto. For example, the separation unit 10 may be disposed between the device 100 and the refrigerant recovery device 50. Alternatively, the separation unit 10 may be, for example, built in the refrigerant recovery device 50.

With the refrigerant recovery system according to the present modification, effects that are the same as those described with the refrigerant recovery system 1 can be obtained.

### (4-7) Modification 1G

In the example described in the above embodiment, the used refrigerant condensed by the second heat exchanger is recovered into the storage unit 20. However, the phase state of the used refrigerant at the time of refrigerant recovery is not limited thereto, and the used refrigerant may change into a gaseous state depending on the temperature and pressure conditions.

### <Second embodiment>

### (1) Refrigerant filling system 1000

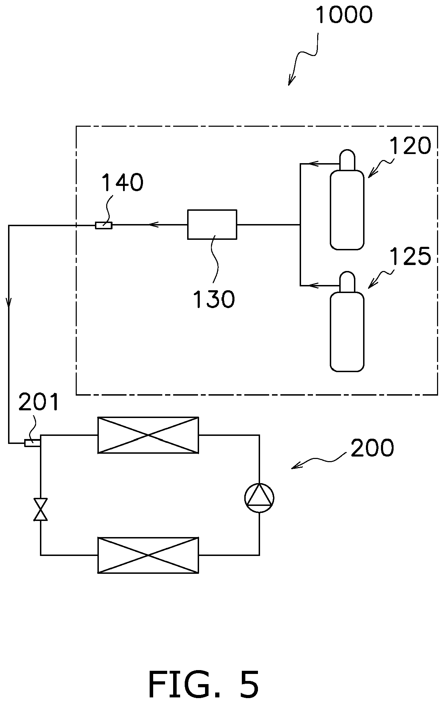

An overview of a refrigerant filling system 1000 according to an embodiment of the present disclosure will be described with reference to Fig. 5. Fig. 5 is a diagram schematically illustrating the overall configuration of the refrigerant filling system 1000. The refrigerant filling system 1000 is a system that fills a device 200 with a mixed refrigerant including a first refrigerant and a second refrigerant as components. The device 200 is, for example, an air conditioning apparatus. In the present embodiment, a space in which the device 200 is installed may be referred to as a "site". In the present embodiment, a facility for managing the recovered refrigerant may be referred to as a "plant". The first refrigerant is, for example, CO₂. The second refrigerant is, for example, HFO. A non-limiting specific example of the HFO used as the second refrigerant is R1234Ze. Instead of R1234Ze, for example, R1234yf may be used for the HFO as the second refrigerant. However, the components of the mixed refrigerant are not limited thereto and can be appropriately changed without departing from the scope of the present disclosure. The used refrigerant may be a mixed refrigerant including three or more components.

Hereafter, each unit of the refrigerant filling system 1000 will be described in detail. As illustrated in Fig. 5, the refrigerant filling system 1000 according to the present embodiment includes a first storage unit 120, a second storage unit 125, a mixing unit 130, and a filling unit 140. In the present embodiment, when the operation of the refrigerant filling system 1000 starts, the refrigerant filled in the first storage unit 120 and the second storage unit 125 flows in a direction indicated by arrows in Fig. 5.

### (2) Detailed configuration

### (2-1) First storage unit 120 and second storage unit 125

The first storage unit 120 is a cylinder filled with the first refrigerant that is unused. The second storage unit 125 is a cylinder filled with the second refrigerant. The second storage unit 125 stores the second refrigerant recovered from a device different from the device 200. The second refrigerant stored in the second storage unit 125 is, for example, a refrigerant recovered from the device 100, and is a refrigerant obtained as a result of separation of at least part of the first refrigerant during the recovery (at the time of recovery). Alternatively, the second refrigerant may be a refrigerant obtained as a result of separation of part of the first refrigerant after the second refrigerant has been recovered from the device 100 (see Modification 1C above).

### (2-2) Mixing unit 130

The mixing unit 130 is a mechanism that mixes the first refrigerant supplied from the first storage unit 120 with the second refrigerant supplied from the second storage unit 125 to generate the mixed refrigerant. In other words, the mixing unit 130 is a mechanism that mixes the first refrigerant supplied from the first storage unit 120 with the second refrigerant supplied from the second storage unit 125 to adjust the composition of the second refrigerant into a different composition. The mixed refrigerant which is filled in the device 200 is generated by adjusting the composition of the second refrigerant into a different composition in the mixing unit 130.

### (2-3) Filling unit 140

The filling unit 140 is a port through which the device 200 is filled with the mixed refrigerant from the mixing unit 130. In the present embodiment, the filling unit 140 is coupled to a service port 201 of the device 200.

### (3) Features

(3-1) The refrigerant filling system 1000 according to the present embodiment is a system that fills the device 200 with a mixed refrigerant including the first refrigerant and the second refrigerant. The refrigerant filling system 1000 includes the first storage unit 120, the second storage unit 125, the mixing unit 130, and the filling unit 140. The first storage unit 120 stores the first refrigerant. The second storage unit 125 stores a refrigerant obtained as a result of separation, during the recovery, of at least part of the first refrigerant from the mixed refrigerant recovered from another device. The mixing unit 130 mixes the first refrigerant supplied from the first storage unit 120 with the refrigerant supplied from the second storage unit 125 to generate the mixed refrigerant. The mixed refrigerant is a refrigerant which is filled in the device 200. The filling unit 140 fills the device 200 with the mixed refrigerant from the mixing unit 130.

The refrigerant filling system 1000 according to the present embodiment includes the first storage unit 120 that stores the first refrigerant, and the second storage unit 125 that stores the refrigerant obtained as a result of separation of at least part of the first refrigerant. With the refrigerant filling system 1000 according to the present embodiment, the device 200 is filled with the refrigerant generated by mixing the first refrigerant with the refrigerant obtained as a result of separation of at least part of the first refrigerant.

With this configuration, it is possible to perform the refrigerant refilling work without the refrigerant, which is recovered from the other device (here, the device 100), being brought back to the plant. Therefore, with the refrigerant filling system 1000 according to the present embodiment, the number of work steps related to the reuse of the refrigerant is reduced.
(3-2)

In the refrigerant filling system 1000 according to the present embodiment, the mixing unit 130 generates the mixed refrigerant which is filled in the device 200, by mixing the first refrigerant to adjust the composition of the refrigerant into a different composition.

In the refrigerant filling system 1000 according to the present embodiment, the mixed refrigerant with the composition of the refrigerant adjusted is generated by the mixing unit 130. With this configuration, it is possible to perform the component adjustment of the mixed refrigerant without the refrigerant, which is recovered from the other device (the device 100), being brought back to the plant. With the refrigerant filling system 1000 according to the present embodiment, it is possible to perform the refrigerant refilling work without the refrigerant, which is recovered from the other device (the device 100), being brought back to the plant. Therefore, with the refrigerant filling system 1000 according to the present embodiment, the number of work steps related to the reuse of the refrigerant is reduced.
(3-3)

In the refrigerant filling system 1000 according to the present embodiment, the first refrigerant is CO₂.

With this configuration, the mixing unit 130 can generate the mixed refrigerant in which CO₂ is mixed.

### (4) Modifications

Modifications of the second embodiment will be described below. The same components as those in the second embodiment are denoted with the same reference numerals, and a detailed description thereof will be omitted.

### (4-1) Modification 2A

In the example described in the above embodiment, the second storage unit 125 stores the second refrigerant recovered from the device 100. However, the configuration of the second storage unit 125 is not limited thereto, and the second storage unit 125 may store the second refrigerant recovered from the device 200. The refrigerant filling system according to the present modification may use the refrigerant recovery system 1 when recovering the second refrigerant from the device 200.

In the present modification, the refrigerant filling system is used together with the refrigerant recovery system 1. With this configuration, it is possible to perform all operations such as the recovery of the used refrigerant, the adjustment of the components of the used refrigerant, and the refilling of the used refrigerant on site. Thus, the number of work steps related to the reuse of the refrigerant is further reduced.

### <Third embodiment>

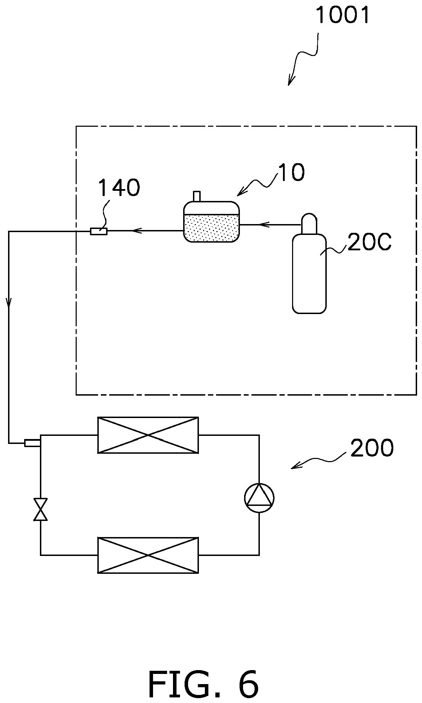

An overview of a refrigerant filling system 1001 according to a third embodiment of the present disclosure will be described with reference to Fig. 6. Fig. 6 is a diagram schematically illustrating the overall configuration of the refrigerant filling system 1001. The refrigerant filling system 1001 according to the present embodiment is a system that simultaneously performs selective separation of a specific component included in the mixed refrigerant and filling of the refrigerant.

As illustrated in Fig. 6, the refrigerant filling system 1001 includes the storage unit 20C, the separation unit 10, and the filling unit 140. Since the configurations of the storage unit 20C, the separation unit 10, and the filling unit 140 are the same as the configurations described above, a detailed description thereof will be omitted. In the refrigerant filling system 1001 according to the present embodiment, the mixed refrigerant stored in the storage unit 20C flows in a direction indicated by arrows in Fig. 6. Then, the first refrigerant included in the mixed refrigerant flowing from the storage unit 20C toward the device 200 is separated in the separation unit 10. With this configuration, the device 200 can be filled with the mixed refrigerant from which the first refrigerant has been separated.

In the refrigerant filling system 1001 according to the present embodiment, the filling of the refrigerant and the selective separation of a specific component constituting the refrigerant are simultaneously performed. Therefore, it is possible to reduce the number of work steps related to the reuse of the refrigerant.

### < Other embodiments>

While embodiments of the present disclosure have been described above, it should be understood that various changes in mode and detail may be made without departing from the spirit and scope of the claims.

The present disclosure is not directly limited to the above-described embodiments. The present disclosure can be embodied by modifying the constituent elements without departing from the scope of the present disclosure at the stage of implementation. In addition, the present disclosure can form various disclosures as appropriate combinations of a plurality of constituent elements disclosed in the above-described embodiments. For example, some constituent elements may be deleted from all the constituent elements described in the embodiments. Furthermore, constituent elements of different embodiments may be appropriately combined. The present embodiments are, therefore, to be considered in all respects as illustrative and not as limiting. Thus, all modifications obvious to those skilled in the art are intended to be included in the embodiments.

### Reference Signs List

- 1: Refrigerant recovery system
- 10: Separation unit
- 15: Separation membrane
- 16: Adsorbent
- 20: Storage unit
- 100: Device
- 120: First storage unit
- 125: Second storage unit
- 130: Mixing unit
- 140: Filling unit
- 200: Device
- 1000: Refrigerant filling system

### Citation List

### Patent Literature

PTL 1: Japanese Unexamined Patent Application Publication No. 2017-72284

## Claims

1. A refrigerant recovery system (1) configured to perform separation of a first refrigerant from a refrigerant comprising the first refrigerant and recovery of the refrigerant, the refrigerant recovery system comprising:
a separation unit (10) configured to perform the separation of the first refrigerant; and
a storage unit (20) configured to store the refrigerant before the first refrigerant is separated or after the first refrigerant is separated.

2. The refrigerant recovery system according to claim 1, wherein the separation of the first refrigerant is performed when the refrigerant is recovered from a device (100) using the refrigerant.

3. The refrigerant recovery system according to claim 1 or 2, wherein the separation of the first refrigerant is performed on the refrigerant stored in the storage unit.

4. The refrigerant recovery system according to any one of claims 1 to 3, wherein the separation unit is configured to adjust a composition of the refrigerant into a different composition through the separation of the first refrigerant.

5. The refrigerant recovery system according to any one of claims 1 to 4, wherein
the separation unit includes a separation membrane (15) through which the first refrigerant is separated from the refrigerant, and
the first refrigerant that has permeated through the separation membrane is discharged to atmosphere.

6. The refrigerant recovery system according to any one of claims 1 to 4, wherein the separation unit includes an adsorbent (16) onto which the first refrigerant is adsorbed.

7. The refrigerant recovery system according to any one of claims 1 to 6, wherein the separation unit is a mechanism configured to distill the first refrigerant from the refrigerant.

8. The refrigerant recovery system according to any one of claims 1 to 7, wherein the first refrigerant is CO₂.

9. A refrigerant filling system (1000) configured to fill a device (200) with a mixed refrigerant comprising a first refrigerant and a second refrigerant, the refrigerant filling system comprising:
a first storage unit (120) configured to store the first refrigerant;
a second storage unit (125) configured to store a refrigerant obtained as a result of separation, during or after the recovery, of at least part of the first refrigerant from the mixed refrigerant recovered from another device;
a mixing unit (130) configured to mix the first refrigerant supplied from the first storage unit with the refrigerant supplied from the second storage unit to generate a mixed refrigerant which is filled in the device; and
a filling unit (140) configured to fill the device with the mixed refrigerant from the mixing unit.

10. The refrigerant filling system according to claim 9, wherein the mixing unit is configured to generate the mixed refrigerant which is filled in the device, by mixing the first refrigerant to adjust a composition of the refrigerant into a different composition.

11. The refrigerant filling system according to claim 9 or 10, wherein the first refrigerant is CO₂.
